# EUROPEAN PATENT APPLICATION

(11) **EP 1 334 658 A2**
(43) Date of publication of application: **13.08.2003**
(21) Application number: 03075353.7
(22) Date of filing: 05.02.2003
(51) Int. Cl.: A01K 41/00, A01K 41/02

(54) **Hatching machine with heat pipes**

(30) Priority: 12.02.2002 NL 1019949
(71) Applicant: Pas, Henricus Gerardus Hermanus Maria, 07760 Ciutadella de Menorca (ES)
(72) Inventor: Pas, Henricus Gerardus Hermanus Maria, 07760 Ciutadella de Menorca (ES)
(74) Representative: Riemens, Roelof Harm

(57) **Abstract**

Hatching machine for hatching eggs, comprising:
- a housing (2);
- a hatching space (3) which is provided in the housing (2) and is designed to accommodate eggs;
- hatching-air circulation means (5) for circulating conditioned hatching air within the hatching space (3); and
- a cooling system;
the hatching air being passed along a transfer surface, which extends into the hatching space (3), of the cooling system.

The cooling system comprises at least one heat pipe (8) which works on the basis of heat of evaporation, extends partly inside the hatching space (3) and which extends partly outside the hatching space (3).

## Description

The invention relates to a hatching machine having a cooling system. In the present context, the term hatching machine is understood as meaning both a preliminary incubation machine and a machine in which the eggs actually hatch out. To allow successful control of a hatching process, it is necessary to dissipate excess heat as a function of the number of hatching days. It is known to dissipate this excess heat by means of additional ventilation past the eggs. However, this has the drawback of interfering with the composition of the hatching air and thus leading to worse hatching results.

In addition, it is generally known to use cooling-water systems. By way of example, US-A 5,410,985 has disclosed a hatching machine according to the preamble of claim 1, in which cooling coils are arranged in the hatching space and, when cooling is required, cold water or other cooling liquid flows through these cooling coils. For this purpose, the cooling coils are connected to a cooling-water unit, also known as a chiller. Therefore, the hatching air in the hatching space can be cooled indirectly by circulating it along the cooling coils. A single cooling-water unit is often used for a plurality of hatching machines arranged in the same hatchery.

A drawback of this arrangement is that the cooling-water unit has to have a large capacity which is matched to the maximum excess heat of the one or more hatching machines together. If the capacity were to be too low, temperatures which deviate from the hatching temperatures desired for the eggs at that time could develop in all the hatching machines. In practise, therefore, a cooling-water unit with a large excess capacity is often selected. An additional drawback is that future expansion to the number of hatching machines in the hatchery also have to be taken into account beforehand when selecting a specific type of cooling-water unit. A cooling-water unit is extremely expensive, and the need to purchase a second unit just for a relatively small expansion in terms of number of eggs to be cooled would make the whole operation excessively expensive. Furthermore, a cooling-water unit of this type is complex and susceptible to fault. The cooling-water unit always has to have sufficient cold water, irrespective of the number of fully occupied hatching machines and also, for example, irrespective of the outside air temperature outside the hatchery in which the hatching machine is positioned. This leads to high energy costs.

It is an object of the present invention to at least partially overcome the abovementioned drawbacks and/or to create a usable alternative. In particular, it is an object of the invention to provide a hatching machine with a simple cooling system which can supply the required cooling capacity for each hatching machine separately in a flexible, hygienic and inexpensive way.

This object is achieved by a hatching machine according to claim 1. The hatching machine is in this way provided with at least one heat pipe which works on the basis of heat of evaporation. A bottom part of the heat pipe extends inside the hatching space, while a top part of the heat pipe extends outside the hatching space. The heat pipe is able to dissipate excess heat which forms during the hatching process by means of an evaporation process. The heat pipe is partially filled with an evaporatable liquid which is under a specific pressure. The liquid and the pressure are selected according to a desired evaporation temperature (boiling point) for the liquid. This desired evaporation temperature is related to the desired temperature in the hatching space, which is approx. 37.8°C. In order not to exceed this desired hatching temperature and to make it possible to start dissipating excess heat from the hatching space in good time, the evaporation temperature may in particular be selected to be slightly lower than the desired hatching-space temperature. If excess heat is formed in the hatching space during the hatching process, this heat can be dissipated via the heat pipe. The relatively high temperature in the hatching space brings the liquid in the heat pipe up to its boiling point. If the liquid boils, it cools itself through evaporation. The gas which is formed in the process can transfer its heat to the walls of that part of the heat pipe which extends outside the hatching space. This causes the gas to cool and return to its liquid state. The abovementioned wall parts in turn dissipate the heat directly or indirectly to air outside the hatching space. Consideration may be given to passing a relatively cold air flow along these wall parts and/or to coupling these wall parts to additional cooling means, such as Peltier elements. The use of the heat pipe brings with it considerable advantages. For example, the heat pipe requires only a very small amount of energy, and is also considerably less expensive to purchase than, for example, the cooling-water unit according to the prior art. The conditioned composition of the hatching air is advantageously not disturbed. Furthermore, the heat pipe is less bulky and is virtually maintenance-free.

Depending on the excess heat to be dissipated from the hatching space, that part of the heat pipe which extends outside the hatching space may be subjected to a greater or lesser degree of external cooling. It is also possible to use a plurality of heat pipes. Therefore, the design of the cooling system remains simple and operating costs are saved. There is no need to invest in expensive cooling-water units. Calculations have shown that cost savings of more than 75% can be achieved in terms of procurement and operating costs.

Hatching machines are generally arranged within a hatchery room. The temperature in a hatchery room of this type is generally held at 22-23°C. It has advantageously been found that a batch of eggs can be efficiently and sufficiently cooled in the hatching machine with the aid of the heat pipe according to the invention when the air in the hatchery room at approx. 22-23°C is used to cool the top part of the heat pipe. The hatchery air used is not contaminated in the process and can be used directly for heating the hatchery room if necessary.

Further preferred embodiments are defined in the subclaims.

The invention also relates to a cooling system according to claim 12, a hatchery room according to claim 13 and a method according to claim 14.

The invention will be explained in more detail with reference to the appended drawings, in which:
- Fig. 1: shows a diagrammatic cross-sectional view of an embodiment of the hatching machine according to the invention;
- Fig. 2: shows a diagrammatic, perspective view of the hatching machine shown in Fig. 1;
- Fig. 3: shows a cooling-system unit from Fig. 1 with external ventilation means; and
- Fig. 4: shows a diagrammatic cross-sectional view of a variant with additional heat exchangers.

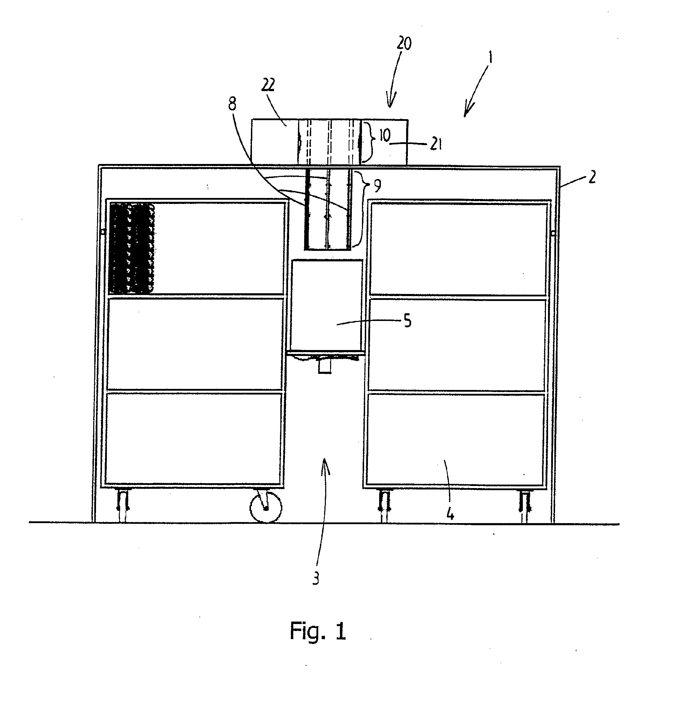

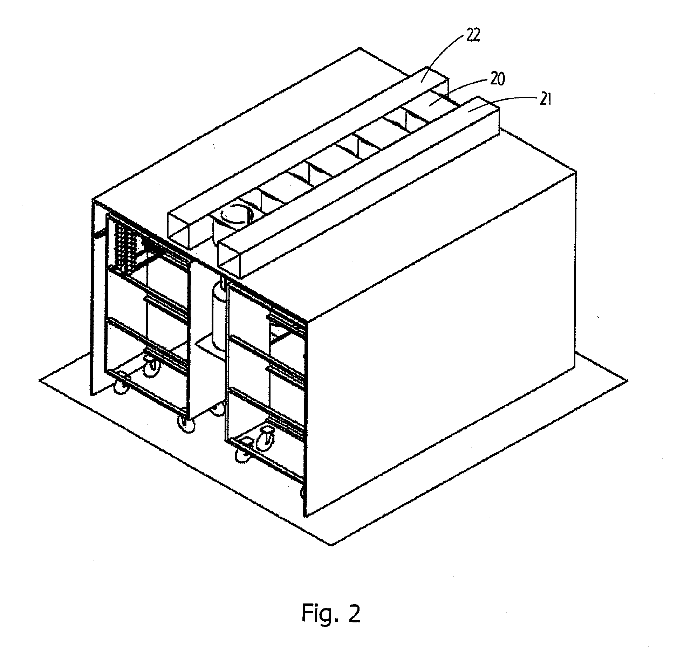

In Figs 1 and 2, the hatching machine is denoted overall by reference numeral 1. The hatching machine 1 comprises a housing 2 which delimits a hatching space 3 in which egg trolleys 4 are positioned. The hatching space 3 also holds hatching-air circulation means 5 which, during operation, guide conditioned hatching air past eggs located in the egg trolleys 4.

According to the invention, the hatching machine 1 is equipped with a cooling system which comprises heat pipes 8. A bottom part 9 of each heat pipe 8 extends inside the hatching space 3, while a top part 10 of each heat pipe 8 extends outside the hatching space 3.

Each heat pipe 8 is partly filled with an evaporatable liquid which will start to boil if a defined temperature is reached in the hatching space 3. It is advantageously possible to determine a desired boiling point for the liquid in the heat pipe 8, firstly by selecting a liquid with defined liquid properties and secondly by ensuring that a specific pressure prevails in the heat pipe 8. For example, a higher pressure leads to a lower boiling point.

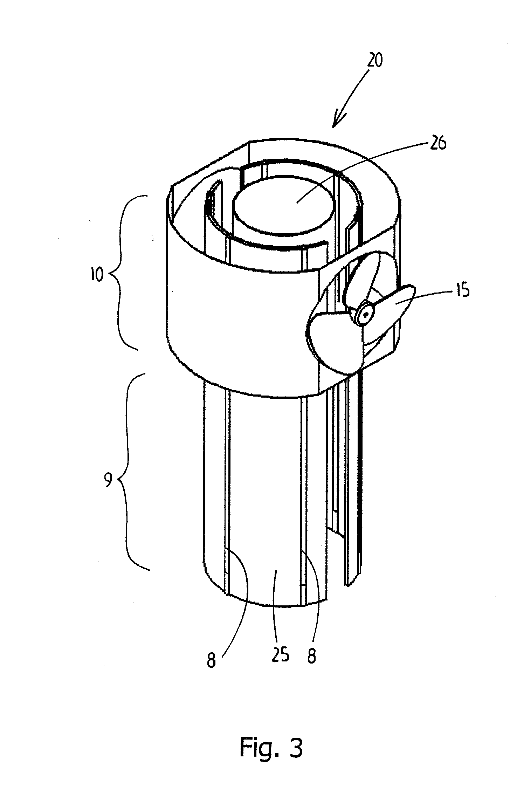

As can be seen from Fig. 3, there is a fan 15 in the vicinity of the top parts 10 of the heat pipes 8, in order to dissipate heat from those parts 10 of the heat pipes 8 which extend outside the hatching space 3 by means of air cooling.

During a hatching process, hatching air is circulated through the hatching space 3 by the hatching-air circulation means 5. In the process, the hatching air flows along the bottom parts 8 of the heat pipes 8.

In the first phase of the hatching process, the eggs have to be warmed. For this purpose, a separate heating element is generally provided in the hatching space 3. In a second phase of the hatching, the eggs begin to produce heat. From a certain moment in time, cooling is required in order to enable a desired hatching temperature to be maintained in the hatching space 3. For this purpose, excess heat has to be dissipated from the hatching space 3. If the boiling point of the liquid in the heat pipes 8 is selected in such a manner that the liquid at least starts to boil from the moment at which it is desired to dissipate excess heat, the heat pipes 8 are together able to flexibly dissipate all the excess heat to outside the hatching space 3. During the boiling of the liquid in the heat pipes 8, vapour is formed. This evaporation process uses energy, which is extracted from the warm hatching air flowing past. If cooler air is then guided along the top parts 10 of the heat pipes 8 via the fan 15, the top parts 10 of the heat pipes 8 are cooled, as a result of which the vapour which has risen into these parts is cooled again and will condense. The condensed liquid flows back down to the bottom parts 9 of the heat pipes 8 under the force of gravity. This process can repeat itself for as long as required, provided that there is a sufficiently high temperature in the hatching space 3 to make the liquid in the heat pipes 8 boil.

The rate of the evaporation-condensation cycle can easily be influenced by the top parts 10 of the heat pipes 8 being cooled more quickly or more slowly, with the result that more or less heat is dissipated from the hatching space 3 per unit time. In this case, this can be achieved by rotating the fan 15 more quickly or more slowly. If the external cooling is completely switched off, the evaporation/condensation process will still continue, but so slowly that it will lead to scarcely any significant dissipation of heat. In this way, the desired hatching temperature in the hatching space 3 can be kept accurately within the desired limits.

The heat pipes 8 are accommodated in a plurality of cooling-system units 20 which are arranged on top of the housing 2. Common air-supply and air-discharge passages 21, 22 are provided on either side of the cooling-system units 20.

Fig. 3 shows a cooling-system unit 20 of this type in more detail. Each unit comprises a plurality of heat pipes 8 which are clamped between vertically disposed heat-transfer surfaces 25. The heat-transfer surfaces 25 are in this case designed as segments of a circle which are produced, for example, from curved aluminium plates. The heat-transfer surfaces 25 are advantageously responsible for considerably increasing the size of the surface along which heat can be supplied to or dissipated from the liquid in the heat pipes 8 by means of air circulation.

The heat-transfer surfaces 25 and the heat pipes 8 surround a central space in which a filler element 26 is positioned. A gap for air to flow through is left clear between the filler element 26 and the heat-transfer surfaces 25 and/or heat pipes 8. As a result, the air flows can successfully move past the heat-transfer surfaces 25 on both the inner side and the outer side. The gap for air to flow through is sealed at the location of the transition between the bottom parts 9 and the top parts 10 of the heat pipes 8. In this case, the seal preferably runs parallel to the ceiling of the housing 2.

Furthermore, the cooling-system units 20 are designed in such a manner that at least half of the heat pipes 8 extends into the hatching space 3. More particularly, substantially 5/8ths of the heat pipes 8 extends into the hatching space 3.

The egg-hatching machines are generally disposed in a hatchery room. The hatchery room may be provided with an air-conditioning installation or other type of air-treatment installation which acts between the outside air and the hatchery air. The use of the heat pipes according to the invention prevents cross-contamination of hatching air and hatchery air and also means that the air conditioning has to operate less than in the prior art. Particularly in cold environments or, for example, during the night, the hatchery room temperature can easily be held at a desired level of, for example, 23°C without additional heating being required.

Surprisingly, it has advantageously been found that the heat pipes 8 can function successfully even with a relatively small temperature difference, for example a difference of less than 15°C, between the desired hatching temperature of 37.8°C and an ambient-air temperature of 23°C. To increase the efficiency, the fan 15 can be arranged in such a manner that the colder ambient air is sucked along the heat pipes 8. This prevents the heat released by the fan motor from having an adverse effect on the already low temperature difference.

The top sides of the cooling-system units 20 are closed off by an insulated cover.

The hatching machine 1 is preferably provided with a number of cooling-system units 20 which is such that in each case one unit with heat pipes 8 opens out in the vicinity of two adjacent egg trolleys 4. In this way, the hatching machine 1 can easily be designed as a modular system, and the machine can easily be expanded or reduced in size as desired by in each case egg trolleys and an associated cooling-system unit.

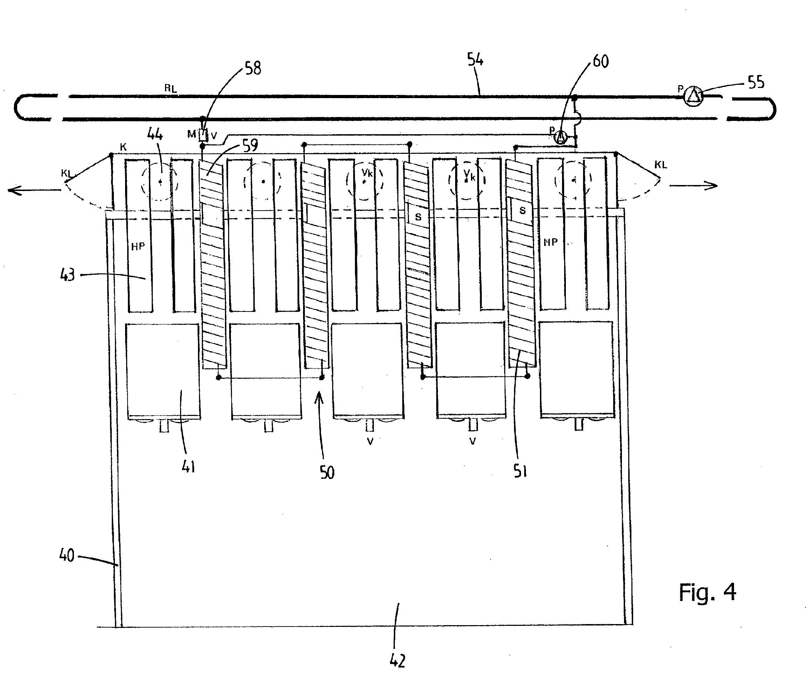

Fig. 4 shows a variant. In this case, the hatching machine 1 comprising a housing 40 with hatching-air circulation means 41. The housing 40 delimits a hatching space 42 into which the bottom parts of a plurality of heat pipes 43 extend. The top parts of the heat pipes 43 can be cooled as desired with the aid of small fans 44. Furthermore, there is a heat exchanger 50 with pipe systems 51 which extends into the hatching space 42. The pipe systems 51 are in this case wound helically. A main pipe 54, in which a pump 55 is accommodated, extends outside the hatching space 42. The main pipe 54 is connected to the heat exchangers 50 and is intended also to be connected to heat exchangers of other, adjacent hatching machines.

If the hatching machines which are adjacent to one another are in each case filled with eggs with a number of days between them, the situation will arise whereby in one hatching machine there are eggs which have to be heated, while in the other hatching machine there are eggs which are already producing excess heat. As a result of the pump 55 being switched on, liquid will be pumped through the main pipe 54 and through the plurality of heat exchangers 50 of the adjacent hatching machines. As a result of the temperature differences in the hatching machines, in the process an advantageous heat exchange will start to take place, the circulated liquid absorbing heat in one hatching space, which heat can then be utilized in the other hatching space.

There is a controllable valve 58 between the main pipe 54 and the heat exchanger 50. Consequently, the heat exchanger 50 can be decoupled from the main pipe 54 as desired, for example when heating is desired or when cooling via the heat pipes 43 is desired.

To ensure that the warm liquid which is still in the pipe system 51 after the valve 58 has been closed leads to a lag in the heating effect, the pipe systems 51 are connected to auxiliary pipings 59 which extend outside the hatching space 42. The auxiliary pipings 59 are likewise coiled helically and are arranged in the area of influence of the external fans 44. Furthermore, there is a small circulation pump 60 which, in the closed position of the valve 58, is able to ensure that the liquid can be pumped through the auxiliary pipings 59 and through the pipe systems 51. If cooling is desired, i.e. if the heat pipes 43 are fully operating, the fans 44 will ensure that relatively cold air is guided along the auxiliary pipings 59. As a result, the liquid situated therein will be cooled. In this way, the heat exchangers can contribute to additional cooling in addition to the heat dissipated by the heat pipes when the valve 58 is in the closed position.

There is advantageously a thermostat in the hatching machine, which thermostat actuates the various components of the hatching machine, such as the fans 44, the valve 58 and the pump 60, as a function of the measured temperature in the hatching space 42. In this way, it is easy to ensure that the hatching temperature remains within very tight limits.

It has been found that the above-described interaction of the heat pipes of the heat exchangers can lead to a reduction in the number of heat pipes by as much as 25%.

In addition to the embodiments shown, numerous variants are possible. For example, the heat pipe parts which lie outside the hatching space can also be cooled indirectly with the aid of Peltier elements. It is also possible for the arrangement of the hatching space in terms of the heat pipes, the batches of eggs, the circulation means, etc. to differ. The hatching machine is suitable in particular for single-stage hatching, but can also be used for multi-stage hatching.

Thus, the invention provides a hatching machine with relatively inexpensive heat pipes which contribute to enabling an optimum hygiene, temperature and humidity level to be maintained around the eggs which are to be hatched. Since a hatching process for eggs takes place slowly and in a predictable way, the hatching temperature can easily and reliably be kept within the desired limits with the aid of a controllable cooling of the top parts of the heat pipes. The heat pipes together, even at low ambient temperatures, are well able to provide a hatchery room with cost-free heating. The hatching machine according to the invention is relatively inexpensive to purchase and during use requires only a fraction of the energy used by hatching machines according to the prior art.

## Claims

1. Hatching machine for hatching eggs, comprising:
- a housing (2);
- a hatching space (3) which is provided in the housing (2) and is designed to accommodate eggs;
- hatching-air circulation means (5) for circulating conditioned hatching air within the hatching space (3); and
- a cooling system;
the hatching air being passed along a transfer surface, which extends into the hatching space (3), of the cooling system,
**characterized in that**
the cooling system comprises at least one heat pipe (8) which works on the basis of heat of evaporation, extends partly inside the hatching space (3) and which extends partly outside the hatching space (3).

2. Hatching machine according to one of the preceding claims, in which ventilation means are provided for using air cooling to dissipate heat from that part of the heat pipe (8) which extends outside the hatching space (3).

3. Hatching machine according to claim 1 or 2, in which Peltier elements are provided for the purpose of dissipating heat to that part of the heat pipe (8) which extends outside the hatching space (3).

4. Hatching machine according to one of the preceding claims, in which there is a heat exchanger (50) having a pipe system (51) which extends into the hatching space (42) and is connected to a main pipe (54), which extends outside the hatching space (42) and has a circulation pump (55) for pumping a fluid through it, which main pipe (54) is intended to be connected to heat exchangers (50) of adjacent hatching machines.

5. Hatching machine according to claim 4, in which there is a controllable valve (58) between the pipe system (51) of the heat exchanger (50) and the main pipe (54).

6. Hatching machine according to claims 2 and 5, in which the pipe system (51) of the heat exchanger (50) is also connected to an auxiliary piping (59) which extends outside the hatching space (42), which auxiliary piping (59) is provided with a dedicated circulation pump (60) for pumping a fluid through it in the closed position of the valve (58), which auxiliary piping (59) outside the hatching space (42) projects at least partially into the area of influence of the ventilation means (44).

7. Hatching machine according to one of the preceding claims, in which a plurality of heat pipes (8) are provided.

8. Hatching machine according to one of the preceding claims, in which the heat pipe (8) is provided, along at least part of its outer wall, with outwardly extending heat-transfer surfaces.

9. Hatching machine according to claims 7 and 8, in which the heat-transfer surfaces each extend between two heat pipes (8) located next to one another.

10. Hatching machine according to claim 9, in which the heat-transfer surfaces and heat pipes (8) delimit a central space in which a filler element is positioned, leaving clear a gap for air to flow through.

11. Hatching machine according to one of the preceding claims, in which at least half, and in particular substantially 5/8ths, of the heat pipe (8) extends inside the hatching space (3).

12. Cooling system with heat pipe (8) using heat of evaporation for use in a hatching machine according to one of claims 1-11.

13. Hatchery in which there is positioned at least one hatching machine according to one of claims 1-11.

14. Method for hatching eggs using a hatching machine according to one of claims 1-11, in which hatching air causes liquid in that part of the heat pipe (8) which extends into the hatching space to evaporate so as to extract heat from the hatching air, and in which the liquid vapour formed condenses in that part of the heat pipe (8) which extends outside the hatching space (3), so as to dissipate heat to the ambient air.
